# EUROPEAN PATENT APPLICATION

(11) **EP 1 715 663 A2**
(43) Date of publication of application: **25.10.2006**
(21) Application number: 05255963.0
(22) Date of filing: 26.09.2005
(51) Int. Cl.: H04M 1/667

(54) **Electronic device and operational restriction control method/program**

(30) Priority: 18.04.2005 JP 2005119890
(71) Applicant: FUJITSU LIMITED, Kawasaki-shi, Kanagawa 211-8588 (JP)
(72) Inventor: Gamo, Tatsuya, Kamakura-shi, Kanagawa 248-0032 (JP); Kikuchi, Yoshiaki, c/o Fujitsu Limited, Kawasaki-shi, Kanagawa 211-8588 (JP); Nakajima, Yuko, c/o Fujitsu Limited, Kawasaki-shi, Kanagawa 211-8588 (JP); Nakano, Makoto, c/o Fujitsu Limited, Kawasaki-shi, Kanagawa 211-8588 (JP); Tanoue, Tatsuya, c/o Fujitsu Kyushu Net. Tech. Ltd, Fukuoka-shi, Fukuoka 814-8588 (JP)
(74) Representative: Stebbing, Timothy Charles

(57) **Abstract**

An electronic device (2) such as a mobile telephone capable of operating multiple functions simultaneously, and allowing operation of another function, on which an operational restriction has been put, with no decline in security features, even while operating a first function. A control part (6) allows the other function to be selected while operating the first function, and releases the operational restriction after authenticating the user (for example, using a fingerprint sensor (14)) in the case where the operational restriction has been set for the other function. Thus, operability of the electronic device is improved whilst maintaining security.

## Description

The present invention relates to operational restriction control of an electronic device such as mobile terminal devices with multiple functions including a phone function, and more specifically, relates to an electronic device in which processing of multiple functions, security features, and operability are integrated harmoniously, and to a method and a program of operational restriction control.

As an example of electronic devices, there is a mobile terminal device equipped with an open/close lock function for imposing operational restrictions in coordination with an open/close mechanism of the device casing. Such an open/close lock function aims at providing temporary operational restriction on multiple functions or on a selected function by the open/close mechanism, and is activated simply by folding the case when a user leaves the mobile terminal unattended. This allows private information to be kept secret, such as address book entries stored in the mobile terminal. Meanwhile, to maintain easy operability of the mobile device, operations such as receiving an incoming call, carrying on a conversation, and display should not be restricted. After the operational restriction is released selectively, security is maintained by suppressing (locking) operations of other functions.

Among conventional technologies related to such selective release of operational restriction on mobile phones and the like, it is known to switch to a phone talk state by the operation of a specific key when incoming calls are received in a standby state (e.g., Japanese Patent Application Laid-Open Publication No. H09(1997)-261336 (Paragraph No. 0048, FIG. 5, etc.)). It has also been proposed to select setting information according to the contents of incoming calls and messages received whilst in a key lock condition (e.g., Japanese Patent Application Laid-Open Publication No. 2004-328573 (Paragraph Nos. 0021, 0022, FIG. 2, etc.)).

Owing to such partial release of operational restriction, users can handle incoming calls without releasing the open/close lock. However, if the users cannot release the lock during incoming calls or a phone conversation, they find it impossible to operate another function such as the address book during incoming calls. If such a need arises, then a troublesome operation such as the following is required.
1. Terminate the phone call (finish talking).
2. Release the lock.
3. Call back.
This is significantly inconvenient, and because of such inconvenience, lock mechanisms tend not to be utilized, leaving room for further improvement.

The technologies disclosed in Japanese Patent Application Laid-Open Publication Nos. H09(1997)-261336 and 2004-328573 allow a user to answer the phone even with the keys locked, however, multiple key operations are required in order to switch to a phone talk state while receiving incoming calls, so there is a problem that key operations become cumbersome.

Such issues are also common to an electronic device comprising multiple functions, capable of operating another function while operating one function and capable of setting operational restriction on that other function. None of Japanese Patent Application Laid-Open Publication Nos. H09 (1997) -261336, 2004-328573 discloses such issues at all, nor discloses or suggests any solutions for the issues.

The present invention relates to an electronic device capable of operating multiple functions simultaneously and capable of setting operational restrictions, and embodiments thereof can enable operation of another function on which an operational restriction has been put even while a particular function is being used, without loss of its security features.

Embodiments of the invention can also enable activation of another function on which an operational restriction has been put, while a phone call is still in progress, in the case where incoming calls are arrived and the calls are answered, and can improve usability of operations without loss of its security features.

According to a first aspect of the present invention there is provided an electronic device capable of operating another function while operating one function and capable of setting an operational restriction upon each function (e.g. to lock the function), the electronic device comprising a control part that allows said another function to be selected (called) while operating said one function, and that releases the operational restriction (e.g. unlocks the function) based on a judgment of authentication information in the case where the operational restriction has been set upon said another function being called.

Electronic devices according to the present invention include mobile phones and the like, which are capable of allowing a user to perform multiple functions simultaneously such as referring to a phonebook while answering the phone, however, the present invention is not limited to such communication devices as mobile phones. For example, an electronic game machine and the like capable of calling another game (another function) while playing one particular game (one function) is conceivable. The present invention can be applied to electronic devices having such a multi-task function and operational restriction function.

This electronic device accepts another function calling (selection) while operating one function. If an operational restriction has been put on said another function being called, then it may be impossible to activate said another function without removing the operational restriction. Such function calling triggers the prompt of authentication information input. This authentication information is compared with authentication information already registered in the electronic device such as a fingerprint, an identification number, or vein pattern. Users provide such authentication information as required, and through comparison of the authentication information, the operational restriction is either released or remains imposed. That is, the operation of said another function that has been selected becomes possible while the first function is still operative. Since activation of said another function is impossible as long as the authentication information is incorrect, security is preserved; and there is no need to terminate said one ongoing function once in order to operate said another function being called and to activate said one function again at the end of operating said another function being called.

It is preferable that, in the above-described electronic device, the control part be configured to output display information prompting to enter the authentication information after said another function is called. According to such a configuration, users can be informed by the output of display information.

According to a second aspect of the present invention there is provided an operational restriction control method of an electronic device capable of operating another function while operating one function and capable of setting operational restrictions on each function, comprising the steps of allowing said another function to be selected while operating said one function; judging authentication information in the case where an operational restriction has been placed on said another function being selected; and releasing the operational restriction based on the judgment of the authentication information.

According to this configuration, in order to operate another function while operating one function, the step of accepting said another function calling is performed while operating said one function. In this step (process), selection of the other function is made, for example, by operating a specific key. Prior to accepting this function selection, if an operational restriction exists on said another function being called, then authentication information is requested, and based on comparing the input information with reference information, the processing to release the operational restriction is performed. Owing to the sequence of steps, as long as the authentication information is incorrect, activation of the function is impossible, so security features are not lost, and the function being called can be performed after having released the operational restriction that has been put on it.

According to a third aspect of the present invention there is provided an operational restriction control program of an electronic device capable of operating another function while operating one function and capable of setting operational restriction for each function, which when executed by the electronic device, performs the steps of accepting said another function calling while operating said one function; judging authentication information in the case where an operational restriction has been set on said another function being called; and releasing the operational restriction based on the judgment of the authentication information.

According to this configuration, through the linked steps of accepting another function calling while operating one function and of releasing operational restriction by referencing its authentication information in the case where the operational restriction has been set for said another function being called, activation of said another function is made possible only when the authentication information is correct, so that security features are not lost and said another function being called can be executed by the computer without the need for terminating the ongoing function first.

In a preferred embodiment of the electronic device, an authentication information input part for inputting authentication information may be further provided; the control part may be configured to judge whether or not the entered authentication information matches the registered authentication information; or an operation part used for the function calling may be further provided.

In a preferred example of the operational restriction control method, a step of outputting display information prompting for input of authentication information used as a reference for releasing the operational restriction may be further provided.

Likewise, in the operational restriction control program of the electronic device, program code for outputting display information prompting for input of authentication information used as a reference for releasing the operational restriction may be further provided.

The present invention thus provides an electronic device in which harmonious integration of concurrent operations of multiple functions, operability, and security features is realized. For example, in a mobile terminal device as one example of such electronic devices, receiving and answering incoming calls are enabled while an operational restriction has been set thereto; using address search function is enabled while having a phone conversation; and even while an operational restriction (lock function) has been put on the address search function, this and other functions will become available by releasing the operational restriction based on certain conditions, without first terminating the ongoing phone conversation or losing the lock function.

Features and advantages of the present invention are thus as follows.
(1) It makes it possible for an electronic device capable of operating multiple functions simultaneously and capable of putting operational restrictions on its functions to call and execute another function easily on which an operational restriction has been put while one function is being operated, without degradation of security features.
(2) It makes it possible for an electronic device such as a mobile terminal (mobile telephone) capable of receiving incoming calls and conducting a phone conversation to execute another function on which an operational restriction has been put while the call is still in progress, without degradation of security features and without inconvenience of terminating the phone conversation.

Reference will now be made, by way of example only, to the accompanying drawings in which:
FIG. 1 is a block diagram showing a mobile terminal device according to a first embodiment;
FIG. 2 is a diagram showing a mobile terminal device in an opened state;
FIG. 3 is a diagram showing a mobile terminal device in a closed state;
FIG. 4 is a flowchart showing the operation of function calling during incoming calls while open/close lock has been set;
FIG. 5 is a flowchart showing the operation of function calling during incoming calls while the open/close lock has been set;
FIGS. 6A, 6B, 6C, and 6D are diagrams showing an incoming call screen, phone talk screen, and authentication screen and the like.
FIG. 7A is a diagram showing an open/close lock release screen, and 7B is a diagram showing a menu screen;
FIG. 8 is a flowchart showing the operation of function calling while the open/close lock has been set;
FIG. 9 is a flowchart showing the operation when another function is selected while one function is being operated;
FIG. 10 is a block diagram showing a mobile terminal device according to a second embodiment;
FIG. 11 is a diagram showing a mobile terminal device;
FIG. 12 is a diagram showing a mobile terminal device without a fingerprint sensor;
FIG. 13 is a diagram showing a PC;
FIG. 14 is a diagram showing a PDA; and
FIG. 15 is a diagram showing a camera.

### <First Embodiment>

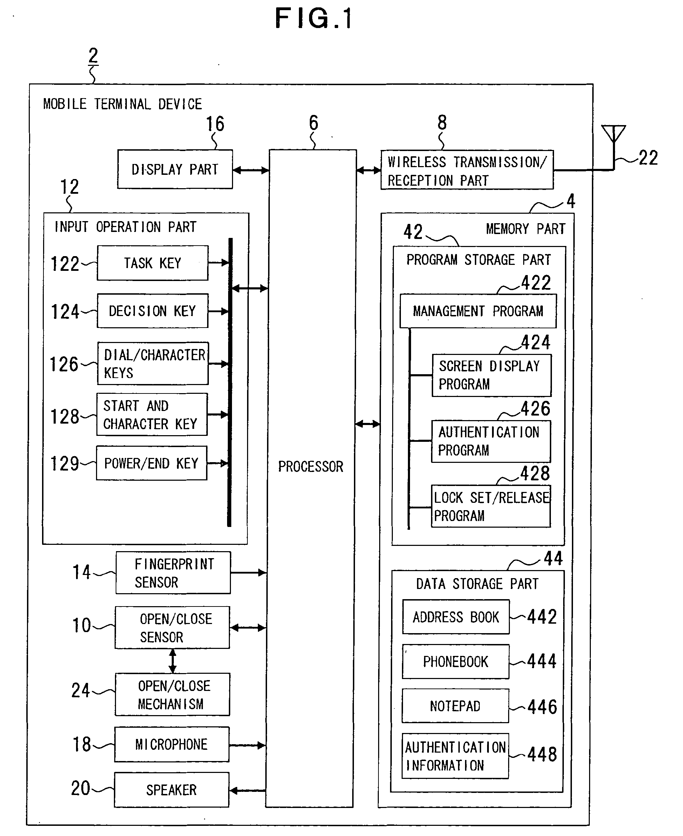

A first embodiment of the present invention will be described with reference to FIG. 1. FIG. 1 is a block diagram showing a mobile terminal device according to a first embodiment.

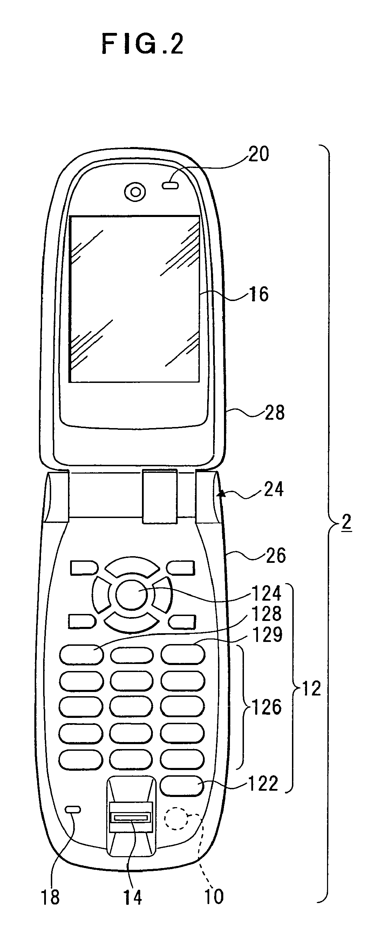

This mobile terminal device 2 is one example of electronic devices that comprise a plurality of functions including phone call function, and the mobile terminal device 2 of this embodiment includes open/close lock function interlocked with an open/close mechanism to be described later (FIG. 2). The open/close lock function is a function for putting operational restriction on all or some of the functions that the mobile terminal device 2 provides; and for establishing a locked-up state automatically by synchronizing the timing to put the operational restriction with the open/close mechanism. That is, a locked-up state is established by changing the device from an opened state to a closed state.

This mobile terminal device 2 includes a memory part 4, a processor 6, a wireless transmission/reception part 8, an open/close sensor 10, an input operation part 12, a fingerprint sensor 14, a display part 16, a microphone 18, a speaker 20 and others. The memory part 4 represents record medium such as a ROM (Read-Only Memory), a RAM (Random-Access Memory) as a whole, and may be comprised of removable record medium. In this memory part 4, a program storage part 42, a data storage part 44, and others are defined; and in this program storage part 42, a management program 422, a screen display program 424, an authentication program 426, a lock/release program 428, and other various types of information processing programs are stored.

The management program 422 constitutes a framework and manages storage and deletion of data such as address book, phonebook, notepad; execution and stop of the screen display program 424, the authentication program 426, the lock set/release program 428, and other various types of information processing programs. The lock set/release program 428 executes lock setting (operational restriction) and its release (release of restriction) to each function. In this case, for the operational restriction, various types of modes such as all-lock mode, secret mode, and falsification-proof mode are provided in order to meet the demand for security features. All-lock mode puts operational restriction on all the functions; secret mode puts operational restriction on display function of phonebook data and schedule data; and falsification-proof mode puts operational restriction on display and edit functions of data such as phonebook, profile, and schedule. This mobile terminal device 2 is configured such that even if operational restrictions have been put on any of the functions, incoming call function and phone talk function are free from such operational restrictions. Further, in order to release operational restrictions that have been put on the functions, authentication information is referenced and for this authentication information, previously registered information by users such as fingerprints, a PIN number, and vein information are used.

In the data storage part 44, an address book area 442, a phonebook area 444, a notepad area 446, and authentication information area 448, and others are defined and relevant data is stored respectively. That is, address data such as contacts is stored in the address book area 442; phone numbers for making a call and email addresses for sending/receiving emails are stored in the phonebook area 444; memos written by users as needed are stored in the notepad area 446, and these information belong to private information of users. In the authentication information area 448, various types of authentication information such as fingerprints, a PIN number, vein information and the like are registered.

The processor 6 constitutes the control part, the operational restriction setting judgment part, the authentication information request part, the information processing part and the like. The processor 6 is comprised of a CPU (Central Processing Unit) or the like, and provided with the memory part for storing data in the process of computing. This processor 6 executes various types of programs such as the above-described management program 422, and performs various settings and controls such as phone call function, open/close lock function, its release function, operational restriction setting judgment function, authentication information request function, screen display function, input/output of various data function, address book or phonebook searching function, notepad writing function, or its delete function. That is, among various types of functions of the processor 6, the control part provides functions to accept another function calling while operating one function and to release operational restriction based on the judgment of authentication information in the case where the operational restriction has been set to the function being called. More specifically, the control part provides such a function that accepts incoming calls in the case where operational restriction has been set; accepts another function calling during a phone talk; and releases the operational restriction based on authentication information, in the case where the operational restriction has been set to the function being called.

Further, the function as the operational restriction setting judgment part the processor 6 possesses is a function to judge whether or not operational restriction has been set to another function being called in the case where said another function is called while operating one function. Furthermore, the function as the authentication information request part is a function to make a request to the user for authentication information for releasing the operational restriction in the case where the operational restriction setting judgment part judges that the operational restriction has been set to said another function. Moreover, the function as the control part that is linked with these functions is a function to make a judgment by comparing the authentication information requested from the authentication information request part with the authentication information entered by the user, and that releases the operational restriction based on the judgment result.

The wireless transmission/reception part 8 performs transmission/reception over wireless signals to and from base stations (not shown) via an antenna 22. This wireless transmission/reception part 8 includes a modem circuit for performing modulation/demodulation as signal processing, and a baseband circuit for performing encryption/decryption and the like.

The open/close sensor 10 is disposed when the open/close mechanism 24 is provided for the mobile terminal device 2, and detects electrically that the open/close mechanism 24 is brought into an opened state or a closed state.

The input operation part 12 is used for entering phone numbers, characters, and PIN numbers as a personal identification number; for activating a function; and for operating its release and the like. The input operation part 12 includes a task key 122, a decision key 124, dial and character keys 126, a start and character key 128, a power/end key 129, and others. When a PIN number or the like is used as authentication information, the input operation part 12 constitutes the authentication information input part.

In this input operation part 12, the task key 122 comprises an operation part used for function calling, and used for entering instructions such as activation of functions. The decision key 124 is used for entering a confirmation of instructions for the information or the function displayed on the display part 16 when the function is activated. Dial and character keys 126 are used for dial input, character input, PIN number input as authentication information and others. The start and character key 128 is used for starting a phone call. The power/end key 129 is used for turning the power on and terminating phone calls.

The fingerprint sensor 14 comprises the authentication information input part, and in this embodiment, detects the fingerprints of users that are one of the authentication information. The fingerprint sensor 14 may be skipped when fingerprints are not used as authentication information.

The display part 16 consists of an LCD (Liquid Crystal Display), for example, and displays images such as characters, graphics, and pictures; status indication while one function is operated; and in the case where another function calling is performed while one function is operated, displays information about the function calling or its status indication in progress.

The microphone 18 converts voice input into electrical signals, and the speaker 20 converts the electrical signals into voice. The microphone 18 and the speaker 20 are used in both outgoing call mode and incoming call mode; however, in all-lock mode, operational restriction is set thereto.

According to the mobile terminal device 2 configured as such can operate multiple functions simultaneously as well as put operational restriction selectively on each function depending on its security features. Further, it can accept another function calling while operating one function; accept input of authentication information if operational restriction has been set to said another function; compare the entered authentication information with the registered authentication information; and operate said another function while operating said one function if the entered authentication information is correct. For example, if a situation arises in which phonebook needs to be referenced during incoming calls in the case where operational restriction has been set to the phonebook and receiving incoming calls has been made possible, pressing the task key 122 switches to authentication mode and reference of the phonebook is allowed if the authentication information is found as identical. In this way, another function can be operated while one function is operated based on the condition that the authentication information is identical, and this can save the operation to switch to another function after having terminated one function, maintain security features, and consequently provide the mobile terminal device 2 of higher convenience.

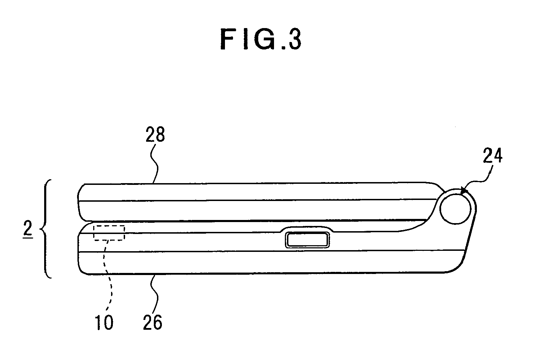

Next, this mobile terminal device 2 will be described with reference to FIGS. 2, 3. FIG. 2 is a front view of the mobile terminal device 2 in an opened state, whereas FIG. 3 is a side view in a closed state. In FIGS. 2, 3, the same symbols are assigned to parts identical to those of FIG. 1.

This mobile terminal device 2 includes a first and a second case part 26, 28 respectively, and these case parts 26, 28 are connected to be openable/closable via the open/close mechanism 24. The open/close sensor 10 is disposed on the case parts 26, 28 that are opened by the open/close mechanism 24, and a detection signal for representing an opened or closed state of the case parts 26, 28 is obtained from this open/close sensor 10. When the case parts 26, 28 are folded in the case where lock setting has been set to the mobile terminal device 2 (FIG. 3), a locked-up state (operational restriction state) is brought into by the detection signal from the open/close sensor 10.

On the case part 26, various keys 122 to 129 of the input operation part 12, the fingerprint sensor 14, the microphone 18 and others are disposed along with the built-in memory part 4, the processor 6 and others. On the case part 28, the display part 16 and the speaker 20 are disposed along with the built-in antenna 22.

According to this mobile terminal device 2, the above-described operations such as calling another function during a phone talk, authentication operation of its authentication information, and operation of said another function can be performed without any alterations to the key arrangement of the existing input operation part 12.

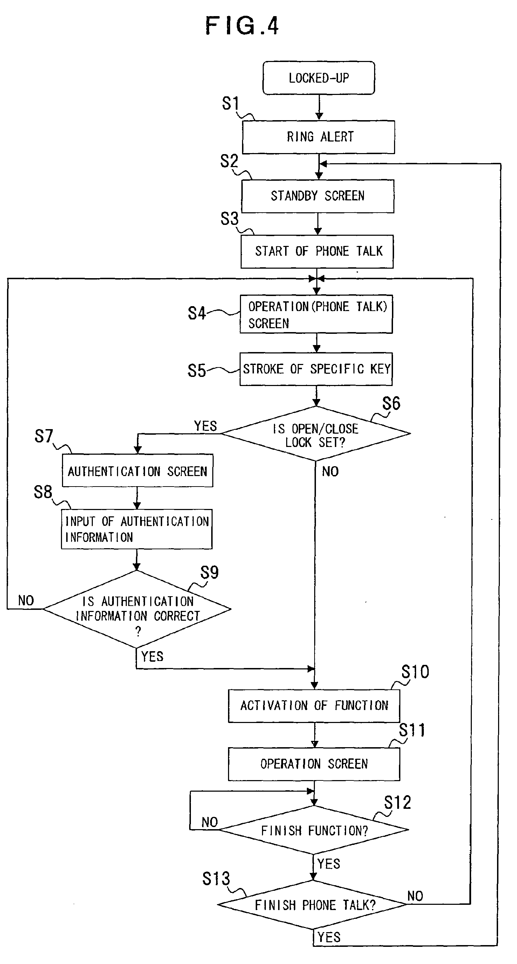

Next, the operation of incoming calls and function calling while the open/close lock has been set will be described with reference to FIG. 4. FIG. 4 is a flowchart showing the operation of incoming calls and function calling while the open/close lock has been set. This processing is performed when the case parts 26, 28 are folded.

As described above, in this terminal device 2, the operation of incoming calls and phone talk is possible even if operational restriction has been set to its various types of functions. This is a situation in which the power has been turned on; an incoming call is received while operational restriction has been set; and a ring alert occurs (step S1) while the case parts 26, 28 have been folded (FIG. 3). When the user opens the case parts 26, 28 (FIG. 2), then a standby screen is activated and displayed on the display part 16 (step S2). With this state, the user starts a phone talk (step S3), and a screen showing that the phone talk is in progress is displayed (step S4). That is, the user can recognize that the phone talk is still in progress.

During this phone talk, for example, pressing the task key 122 (step S5) as a specific key of the input operation part 12 starts another function calling other than the phone talk function. In order to shift to that function, a judgment is made whether or not the open/close lock (operational restriction) has been set (step S6); if the lock has been set, authentication screen is displayed on the display part 16 (step S7); the user enters authentication information by following the instruction displayed on the authentication screen (step S8); and a judgment is made whether or not the entered authentication information is correct (step S9). In this authentication processing, it is judged whether or not the entered authentication information is identical to the previously registered authentication information by using the previously registered authentication information as a reference. If identical, then the authentication completes; the operational restriction is released; the function is activated (step S10); and the screen showing its operation is displayed (step S11). If the operational restriction has not been set, the procedure moves from step S6 to step S10.

The user can operate this function during phone talk, and when the user finishes operating this function (step S12), a judgment is made whether or not the phone talk is over (step S13). If the phone talk is still taking place, then the procedure moves to step S4 to display the screen showing that the phone talk is in progress; and then returns to the standby screen of step S2 when the phone talk is over.

According to such processing, the user can receive incoming calls with the mobile terminal device 2 in an opened state (FIG. 3) and, for example, can refer to the phonebook during the phone talk. In addition, when the user finishes the phone talk, the locked state can be recovered by returning the mobile terminal device 2 to a closed state (FIG. 3) from an opened state (FIG. 2).

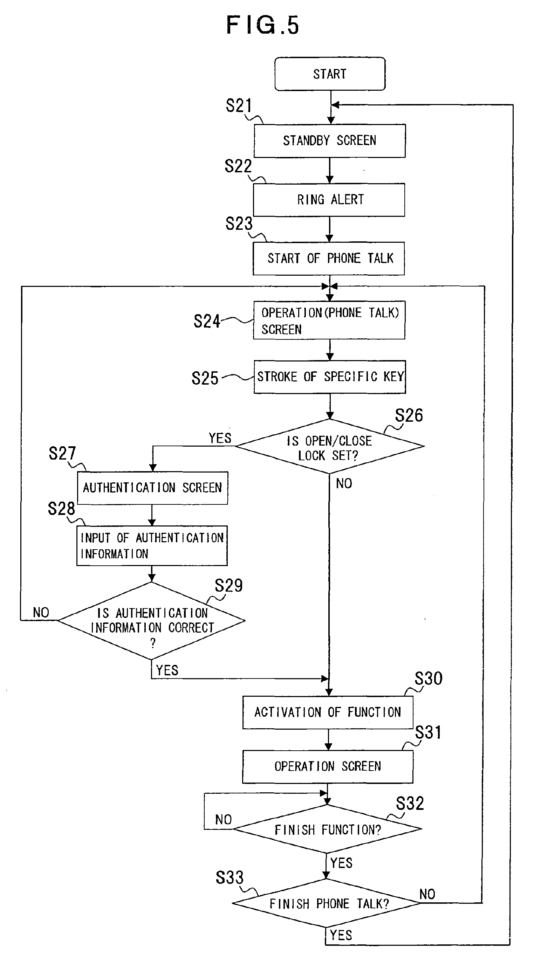

Next, the operation of incoming calls and function calling while the open/close lock has been set in such a situation where the case parts are opened will be described with reference to FIG. 5. FIG. 5 is a flowchart showing the operation of incoming calls and function calling while the open/close lock has been set.

If incoming calls are received while the case parts 26, 28 are kept open (FIG. 2), the processing shown as the flowchart in FIG. 5 is executed. That is, when the case parts 26, 28 are kept open, the standby screen is displayed on the display part 16 (step S21). When a ring alert occurs with this state (step S22); the user starts a phone talk (step S23); and a screen showing that the phone talk is in progress is displayed (step S24). It has been already described that the user can recognize that the phone talk function is still in progress.

During this phone talk, for example, pressing the task key 122 (step S25) as a specific key of the input operation part 12 starts another function calling other than the phone talk function as described above. In order to shift to that function, a judgment is made whether or not the open/close lock (operational restriction) has been set (step S26); if the lock has been set, the authentication screen is displayed on the display part 16 (step S27); the user enters authentication information following the instruction displayed on the authentication screen (step S28); and a judgment is made whether or not the entered authentication information is correct (step S29). In this authentication processing, if the entered authentication information is identical to the previously registered authentication information, then the operational restriction is released; the function is activated (step S30); and the screen showing its operation is displayed (step S31). If the operational restriction has not been set, the procedure moves from step S26 to step S30.

The user can operate this function during phone talk, and when the user finishes operating this function (step S32), a judgment is made whether or not the phone talk is over (step S33). If the phone talk is still taking place, then the procedure moves to step S24 to wait for the specific key to be pressed; and returns to the standby screen of step S21 when the phone talk is over.

This processing is performed when the user receives an incoming call with the standby screen activated (FIG. 2), and can activate another function by releasing its operational restriction during the phone talk. In addition, when the user finishes the phone talk, the locked-up state can be recovered by returning the mobile terminal device 2 to a closed state (FIG. 3).

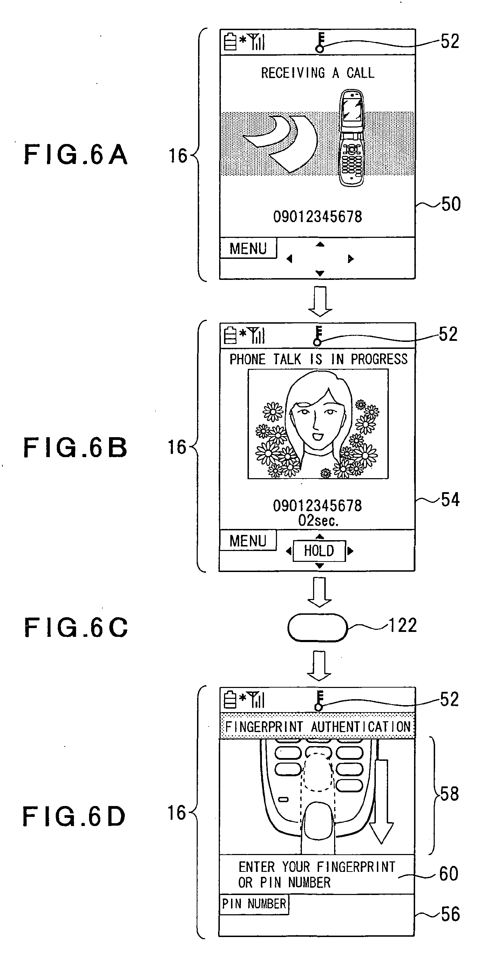

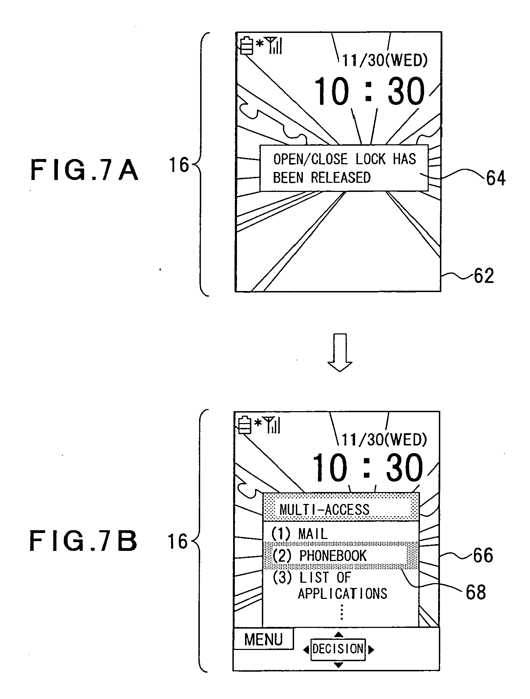

Next, a series of screens from receiving incoming calls to releasing the open/close lock will be described with reference to FIGS. 6A, 6B, 6C, 6D, 7A, and 7B. FIGS. 6A to 6D are diagrams showing screens of an incoming call while the open/close lock has been set, another function calling, and authentication information input and the like, whereas FIG. 7A is a diagram showing a screen that the open/close lock is released, and 7B is a diagram showing a menu screen after the open/close lock has been released.

If an incoming call is received while the open/close lock has been set, a screen 50 for indicating the incoming call is displayed on the display part 16 as shown in FIG. 6A. On this screen 50, a lock icon 52 for indicating that the open/close lock has been set; a message "receiving a call", the phone number of the caller and others are displayed.

When the user starts the phone talk, a screen 54 for indicating that the phone talk is in progress is displayed on the display part 16 as shown in FIG. 6B. On this screen 54, a message "phone talk is in progress" and the phone number of the caller are displayed. This screen 54 may also display the name of the caller and other information.

During this phone talk, pressing the task key 122 (FIG. 2) shown in FIG. 6C brings up an input screen 56 for entering authentication information as shown in FIG. 6D. On this input screen 56, a text indicating that "fingerprint authentication" is selected; and an image 58 for instructing how to use the fingerprint authentication method as well as a message "Enter your fingerprint or PIN number" is displayed as a guide message 60 for prompting input of authentication information.

When the user enters fingerprints or a PIN number in response to this guide message, then a screen 62 for indicating a release of the open/close lock is displayed on the display part 16 as shown in FIG. 7A. On this screen 62, "Open/close lock has been released" is displayed as a message 64 for indicating the current state.

Following the screen 62 for indicating that the open/close lock has been released, a menu selection screen 66 for indicating a menu of functions from which the operational restriction has been released is displayed on the display part 16 as shown in Fig. 7B. On this menu selection screen 66, various types of functions different from the phone talk function are displayed as selectable menu. For example, such functions as "Multi-access, Mail, Phonebook, List of applications..." are displayed. "Multi-access" indicates that activation and operation of another function that is selected is available while operating one function, for example, while operating the phone talk function. In this situation, for example, putting a cursor 68 on the "phonebook" and pressing the decision key 124 unfolds the phonebook data on the display part 16. In this way, the user can reference the phonebook during the phone talk. If the user selects a different function, then that function is operated. When the user finishes using these functions, the screen 54 indicating that the phone talk is in progress is displayed as shown in FIG. 6B, and the standby screen is brought back when the user finishes the phone talk.

With such a series of screen and guide information displays, the user can operate another function easily by releasing its lock during the phone talk.

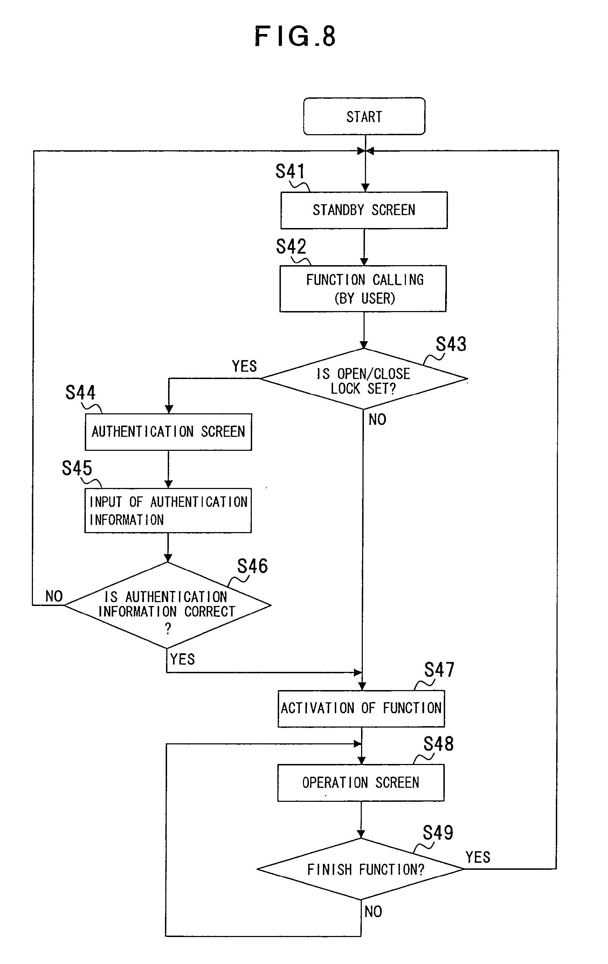

Next, the operation of function calling while the open/close lock has been set will be described with reference to FIG. 8. FIG. 8 is a flowchart showing the operation of function calling while the open/close lock has been set.

When the case parts 26, 28 are opened, the standby screen is displayed on the display part 16 (step S41). On this standby screen, the lock icon 52 for indicating the open/close lock has been set is displayed if the lock is applied. In this standby state, when the user operates function calling, the function calling is accepted (step S42), followed by a judgment that the open/close lock has been set or not (step S43).

If the open/close lock has been set, then the authentication screen is displayed on the display part 16 (step S44); and the user is prompted with input of authentication information. When the user enters the authentication information by following the guide (step S45); then a judgment is made whether or not the entered authentication information is correct (step S46). If the entered authentication information is identical to the previously registered authentication information, then the open/close lock is released and the selected function is activated (step S47); and the screen showing its operation is displayed (step S48). If the operational restriction has not been set, the procedure moves from step S43 to step S47. If the authentication information is judged as incorrect in step S46, then the standby screen in step S41 is brought back. After the authentication processing has completed successfully and the function has been activated, a judgment is made whether or not the function is finished (step S49), and the standby screen is brought back after the completion of the function (step S41) .

According to this configuration, a certain function can be called from the standby screen, and when the lock has been set to the function, the function can be activated and operated through its authentication processing. As described above, without terminating the operation of the function, the mobile terminal device 2 can be put into a locked-up state by folding it to a closed state (FIG. 3).

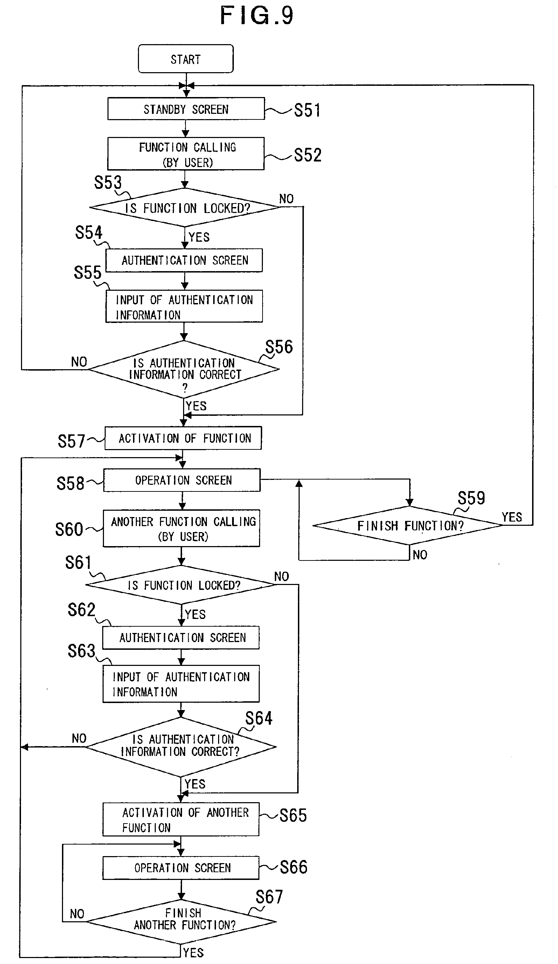

Next, the operation of another function calling while one function is operated will be described with reference to FIG. 9. FIG. 9 is a flowchart showing the operation of another function calling while one function is operated.

Steps S51 to S58 show the operation of one function, and steps S60 to S66 show the operation of another function while operating said one function. In this operation, operational restriction may have been set to any of the functions in steps S60 to S66. This is a situation in which the operation of another function calling is accepted while operating one function and in which operational restriction is released from said another function in the case if any operational restrictions have been put thereon.

The standby screen is displayed on the display part 16 of the mobile terminal device 2 in a standby state (step S51). With this state, when the user executes one function calling (step S52), then a judgment is made whether it has been locked or not (step S53); if it has been locked, then the authentication screen is displayed on the display part 16 (step S54); and the user is prompted with input of authentication information. When the user enters the authentication information by following the guide (step S55); then a judgment is made whether or not the entered authentication information is correct (step S56). If the entered authentication information is identical to the previously registered authentication information, then the lock is released and the selected function is activated (step S57); and the screen showing its operation is displayed (step S58). If the function has not been locked in step S53, the procedure shifts from step S53 to step S57 to activate the function.

If the authentication information is judged as incorrect in step S56, then the standby screen in step S51 is brought back. After the authentication processing has completed successfully and the function has been activated, the management program 422 monitors whether or not the ongoing function is finished (step S59), and brings back the standby screen at the end of the function (step S51).

By the way, if another function calling occurs while operating one function (step S60), then a judgment is made whether or not the function has been locked (step S61). If the function has been locked, then authentication screen is displayed on the display part 16 (step S62); and the user is prompted with input of authentication information. When the user enters the authentication information by following the guide (step S63); then a judgment is made whether or not the entered authentication information is correct (step S64). If the entered authentication information is identical to the previously registered authentication information, then the lock is released and said another function is activated (step S65); and the screen showing its operation is displayed (step S66). If said another function has not been locked in step S61, the procedure shifts from step S61 to step S65 to activate said another function.

If the authentication information is judged as incorrect in step S64, then the screen showing the operation of the ongoing function in step 58 is displayed. After the authentication processing has completed successfully and said another function has been activated, the management program 422 monitors whether or not said another function is finished (step S67), and shifts to the screen showing the ongoing operation at the end of said another function (step S58), making it ready for calling other functions.

According to this configuration, another function can be called while the operation of one function continues, and if the lock function has been applied to said another function being called, that is, if operational restriction has been put thereon, then said another function can be activated and operated through input of its authentication information and judgment of its correctness. Since the activation of this latter function is realized by an interrupt-service in the middle of processing the former function, so when the latter function finishes, the procedure returns to the previous function to continue its operation. Furthermore in this embodiment, by putting the mobile terminal device 2 back into a closed state (FIG. 3), the lock function can be applied again. The electronic devices such as the mobile terminal device 2 comprising such features can operate multiple functions simultaneously with no decline in security features and operability.

### <Second Embodiment>

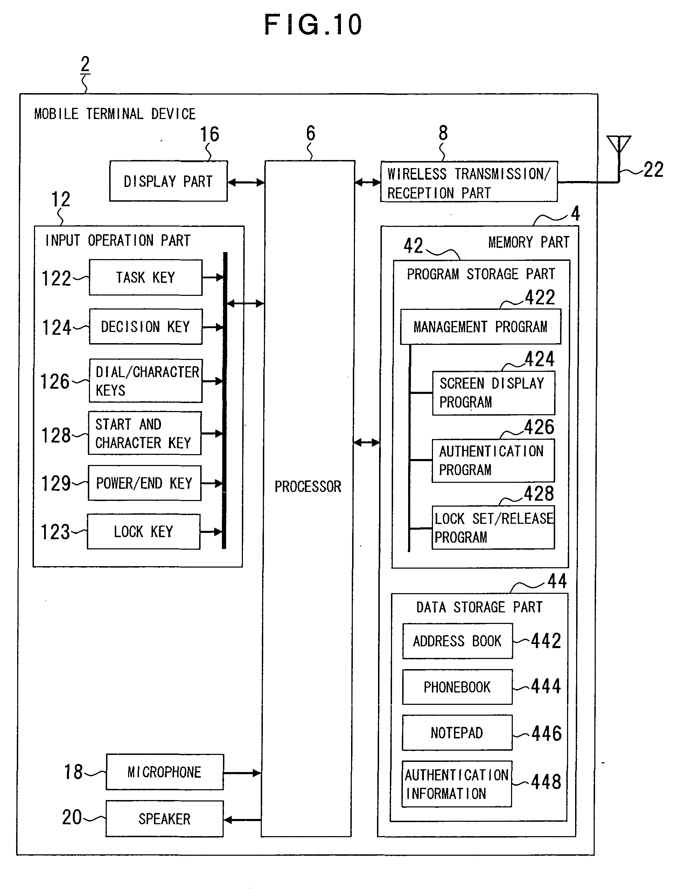

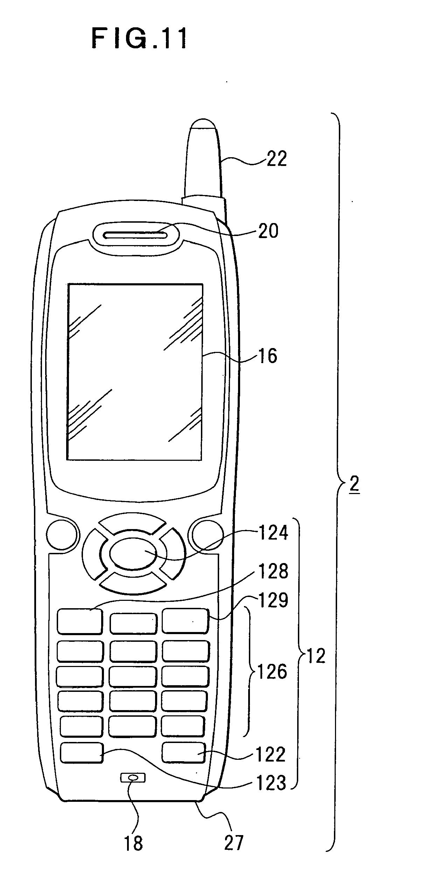

A second embodiment of the present invention will be described with reference to FIGS. 10, 11. FIG. 10 is a block diagram of a mobile terminal device 2 according to a second embodiment. FIG. 11 is a diagram showing a specific configuration example of the mobile terminal device. In FIGS. 10, 11, the same symbols are assigned to parts identical to those of FIGS. 1, 2.

The mobile terminal device 2 of this embodiment includes a lock key 123 in place of the open/close sensor 10 (FIG. 1). According to this configuration, pressing the lock key 123 activates the lock function and puts operational restriction. That is, this lock key 123 executes the activation of the lock function in the lock set/release program 428 stored in the program storage part 42. Other configurations are the same as those of the mobile terminal device 2 of the first embodiment.

Such a mobile terminal device 2 is not equipped with the open/close mechanism 24 (FIG. 1), and comprised of a single case part 27. The lock key 123 is disposed on this case part 27. The input operation part 12 and the display part 16 and others that are disposed separately on the case parts 26, 28 are arranged on the single case part 27. Each configuration is the same as those of the mobile terminal device 2 of the first embodiment (FIG. 2).

Also in this configuration, the above-described operations shown in FIGS. 4, 5, screen displays shown in FIGS. 6A to 7B, and operations shown in FIGS. 8, 9 can be performed. That is, while operational restriction has been set by operating the lock key 123, the processing such as accepting incoming calls and activating one function; calling another function during the incoming calls or while operating said one function; and activating and operating said another function through its authentication processing is enabled, so that there is an advantage that complicated key operations are not required.

### <Other Embodiments>

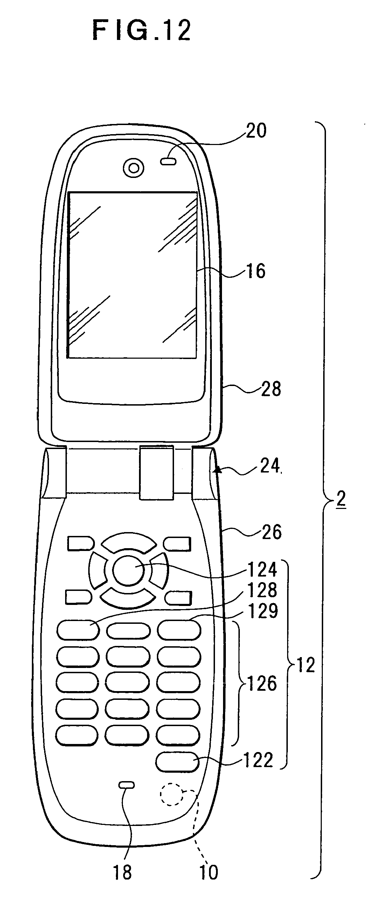

In the above-described first embodiment, the mobile terminal device 2 comprising the fingerprint sensor 14 (FIGS. 1, 2) was exemplified. However, as shown in FIG. 12, the mobile terminal device 2 can be configured without the fingerprint sensor 14, by enabling the release of operational restriction through a secret number such as a PIN number.

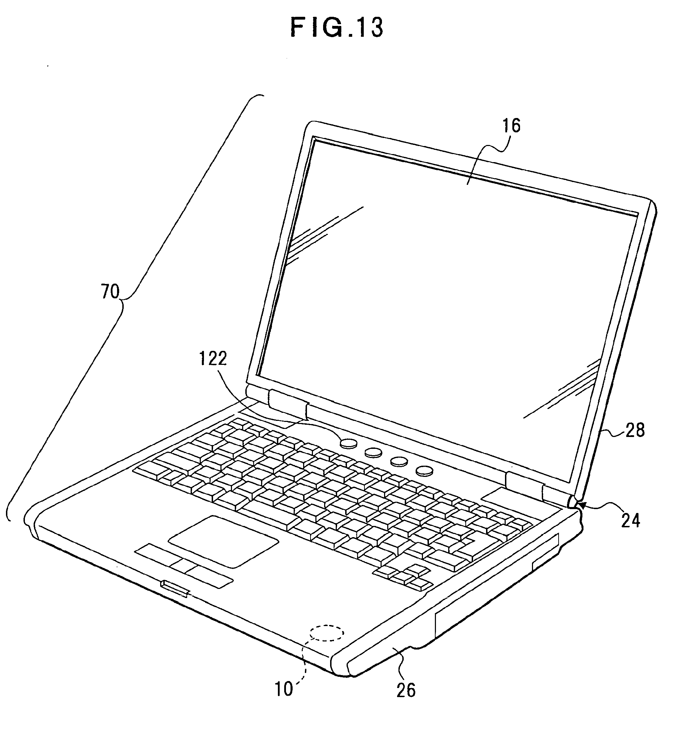

In the above-described embodiments, the mobile terminal device 2 was exemplified as an electronic device; however, as shown in FIG. 13, the present invention can also be applied to a PC (personal computer) 70. In FIGS. 13, the same symbols are assigned to parts identical to those of FIGS. 1, 2. This PC 70 is constructed such that the case part 26 and the case part 28 are disposed to be openable/closeable via the open/close mechanism 24, and on the case part 26, the above-described open/close sensor 10 is disposed. That is, it is also possible to configure the PC 70 to activate its lock mechanism by detecting an open/close state. In addition, in this PC 70, disposing the task key 122 as a specific key provides, as described above, the capability of calling another function on which operational restriction has been put while one function is operated; enables to activate and then operate said another function after its authentication processing is completed; and can enhance security features for the PC 70 as well.

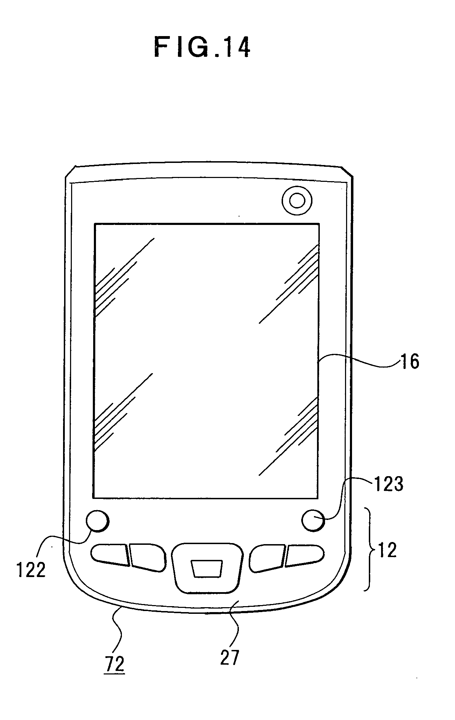

Further, the present invention can also be applied to a PDA (Personal Digital Assistant) 72 shown in FIG. 14. As has been described with reference to FIGS. 10, 11, the PDA can be configured to include the lock function along with the lock key 123. Such a configuration provides, as described above, the capability of calling another function on which operational restriction has been put while one function is operated; enables to activate and then operate said another function after its authentication processing is completed; and can enhance security features for the PDA 72 as well.

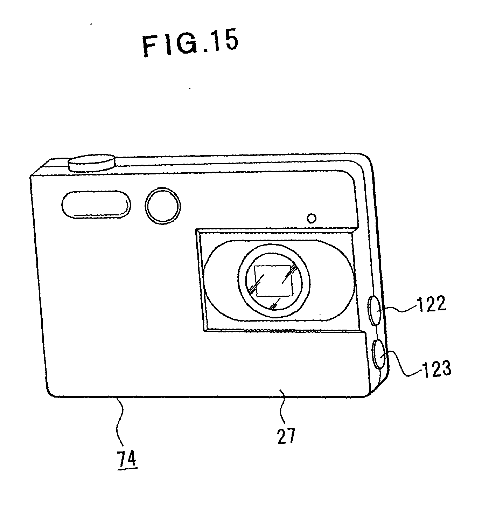

Further, the present invention can also be applied to a camera 74 shown in FIG. 15. As has been described with reference to FIGS. 10, 11, the camera can be configured to include the lock function along with the lock key 123. Such a configuration provides, as described above, the capability of calling another function, for example, edit function on which operational restriction has been put that becomes effective while one function such as photo shooting mode is operated; enables to activate and then operate the edit function after its authentication processing is completed. Thus the camera 74 can be also provided with enhanced security features against deletion or falsification of its photographed data.

Further, the present invention can be applied to such as a game machine as well. For example, by enabling the game machine to call another game function on which operational restriction has been put while one game function is operated; and to activate and then operate said another game function after its authentication processing is completed, the game machine can be provided with enhanced security features against deletion or falsification of information set to the game.

In the above-described embodiments, the mobile terminal device 2, the PC 70, the PDA 72, the camera 74, and the game machine were exemplified as electronic devices. However, the present invention can also be applied to various types of electronic devices capable of operating multiple functions simultaneously and capable of setting operational restriction for the functions, other than the above-described ones.

In the above-described embodiments, a situation was exemplified in which the mobile terminal device 2 that has been locked by the open/close lock mechanism could start a phone talk when it receives incoming calls, and could operate another function such as address book reference during a phone talk. However, it is also possible to configure the mobile terminal device 2 in such a way that the mobile terminal device 2 that is playing a game as an example of one function can start a phone talk immediately after it receives incoming calls, or can start a phone talk after it requests authentication information followed by a verification of correctness of the provided authentication information.

In the above-described embodiments, the open/close lock function that was interlocked with the open/close mechanism 24 (first embodiment), and the lock function activated by operating the lock key 123 (second embodiment) were exemplified. However, regarding the electronic devices such as the mobile terminal device 2 operateing multiple functions simultaneously, it is also possible to configure the devices in such a way that the lock function can be activated not only by the open/close mechanism 24 and the lock key 123, but also by detecting the absence of operations by the user for a certain time period.

A most preferred embodiment and the like of the present invention have been described above. However, the present invention is not limited to the above description; it goes without saying that various modifications and alterations may be made by a person skilled in the art on the basis of the gist of the invention that is described in the claims and disclosed in the detailed description of the invention, and that such modifications and alterations are included in the scope of the present invention.

The present invention relates to an electronic device capable of operating multiple functions simultaneously and capable of setting operational restriction, and is useful such that it enables to operate another function through authentication information matching; to realize simultaneous operation of multiple functions without degrading usability and security; and to increase level of convenience for electronic devices.

## Claims

1. An electronic device capable of operating another function while operating one function and capable of setting an operational restriction for each function, comprising
a control part which is responsive to selection of said another function while operating said one function, to release the operational restriction based on a judgment of authentication information in the case where the operational restriction has been set for said another function.

2. The electronic device of claim 1, further comprising an authentication information input part in order to enter authentication information.

3. The electronic device of claim 2, wherein the control part is arranged to judge whether or not the entered authentication information matches the registered authentication information.

4. The electronic device of claim 1, 2, or 3, further comprising an operation part used for function selection.

5. The electronic device of any preceding claim, wherein the control part is further arranged to display information prompting for input of authentication information in response to selection of said another function.

6. The electronic device of any preceding claim, wherein the operational restriction is a lock preventing use of the function.

7. An operational restriction control method of an electronic device capable of operating another function while operating one function and capable of setting an operational restriction for each function, comprising the steps of:
allowing selection of said another function while operating said one function;
judging authentication information in the case where an operational restriction has been set on said another function; and
releasing the operational restriction based on the judgment of the authentication information.

8. The method of claim 7, further comprising the step of outputting display information prompting for input of authentication information used as a reference in order to release the operational restriction.

9. An operational restriction control program of an electronic device capable of operating another function while operating one function and capable of setting an operational restriction for each function, which program, when executed by the electronic device, carries out the steps of:
accepting selection of said another function while operating said one function;
judging authentication information in the case where an operational restriction has been set on said another function; and
releasing the operational restriction based on the judgment of the authentication information.

10. The program of claim 9, further comprising the step of outputting display information prompting for input of authentication information used as a reference in order to release the operational restriction.
